# EUROPÄISCHE PATENTSCHRIFT

(11) **EP 4 375 537 B1**
(45) Veröffentlichungstag und Bekanntmachung des Hinweises auf die Patenterteilung: **04.06.2025**
(21) Anmeldenummer: 23209990.3
(22) Anmeldetag: 15.11.2023
(51) Int. Cl.: F16G 15/12, F16G 13/12

(54) **KETTE SOWIE ANORDNUNG EINER KETTE MIT EINEM KETTENRAD**
CHAIN AND ASSEMBLY OF A CHAIN WITH A CHAIN WHEEL
CHAÎNE ET AGENCEMENT D'UNE CHAÎNE AVEC UN PIGNON

(30) Priorität: 22.11.2022 DE 202022106526 U
(43) Veröffentlichungstag der Anmeldung: 29.05.2024
(73) Patentinhaber: J.D. Theile GmbH & Co. KG, D-58239 Schwerte (DE)
(72) Erfinder: KRESIC, Ivan, 58239 Schwerte (DE); MAG, Dirk, 58239 Schwerte (DE)
(74) Vertreter: Haverkamp Patentanwälte PartG mbB

(56) Entgegenhaltungen:
- DE-A1- 102010 061 264
- US-A- 5 435 434
- US-A1- 2012 065 012

## Beschreibung

Die Erfindung betrifft eine Kette mit den Merkmalen des Oberbegriffes des Anspruchs 1.

Eine Kette umfasst eine Vielzahl an Kettengliedern, die ineinander eingehängt sind. Die Kettenglieder weisen zwei gegenüberliegende, üblicherweise parallel ausgerichtete Schenkel und die beiden Schenkel verbindende Buge auf, sodass durch jedes Kettenglied ein geschlossener Verlauf gebildet ist. Üblicherweise handelt es sich um Stahlketten.

Eine Kette ist für eine Vielzahl von Anwendungsfällen einsetzbar. Ketten werden auf Zug belastet und dienen etwa dem Abspannen von Gegenständen oder werden als Trieb in einem Förderer eingesetzt. In einem Förderer sind üblicherweise zwei parallellaufende Ketten angeordnet, wobei zwischen den beiden Ketten Stege vorgesehen sind, die ein auf einer Bahn, etwa einer Förderrinne aufliegendes Material schieben und so fortbewegen. Hier eingesetzte Ketten sind Endlosketten; die Ketten werden an den Enden der Bahn umgelenkt.

Zum Einleiten einer Zugkraft auf die Kette wird ein Kettenrad benutzt, welches zumindest eine Kettentasche aufweist. Die Kettentasche ist korrespondierend zu einem ersten Kettenglied der Kette ausgebildet, sodass ein formschlüssiger Kontakt in Zugrichtung zwischen Kettenglied und Kettentasche vorliegt. Über diesen Kontakt wird das Kettenglied in die Zugrichtung bewegt, sodass auf die Kette eine Zugkraft wirkt. Dieses erste Kettenglied ist üblicherweise das Horizontalkettenglied einer Kette, die durch Horizontal- und Vertikalkettenglieder gebildet wird, wie dies etwa für Förderer üblich ist.

Der formschlüssige Kontakt zwischen Kettentasche und Kettenglied erfolgt üblicherweise im Bug-Bereich, und zwar im nach außen weisenden Bereich der in Teilungsrichtung (Längserstreckungsrichtung des Kettengliedes) weisenden Stirnfläche des Buges. Die Übertragung der Kraft von der Kettentasche in das Kettenglied erfolgt durch eine seitens der Kettentasche in das Kettenglied eingebrachte Druckkraft.

Eine bekannte Ausgestaltung eines solchen Kettengliedes ist in DE 196 10 935, DE 198 31 994 und DE 41 24 788 angesprochen. Die in diesen Offenbarungen genannte Kettenart wird auch als Pfeilzahnkette tituliert. Der Bug eines Pfeilzahnkettengliedes ist so ausgestaltet, dass dieser entlang seiner Erstreckungsrichtung, mit der er die beiden Schenkel verbindet, dreigeteilt ist: Er weist zwei voneinander in Bugerstreckung - somit im Wesentlichen in Kettengliedbreitenrichtung - beabstandete Druckabschnitte auf und einen dazwischenliegenden, die Druckabschnitte verbindenden Zwischenabschnitt. Die Druckabschnitte des Kettengliedes dienen als Kontaktflächen zwischen Kettenglied und Kettentasche zum Übertragen der antreibenden Kräfte und können daher auch als Abtriebsflächen angesprochen werden. Eine ähnliche Kette zeigt US 5435431 B1.

Ziel der genannten Pfeilzahnketten ist es, die Druckabschnitte jedenfalls in Bugerstreckungsrichtung gerade auszuführen, um als Kontaktfläche bereits konstruiert einen großflächigen Flächenkontakt zwischen Kettentasche und Horizontalkettenglied zu erreichen und damit die Flächenpressung in diesem Bereich gering zu halten.

Für eine Selbstzentrierung sind die Druckabschnitte gegenüber der Kettenglied-Breitenrichtung pfeilförmig angestellt, sodass der Zwischenabschnitt zumindest abschnittsweise gekrümmt ist.

Problematisch bei diesen Pfeilzahnketten ist, dass tatsächlich im Betrieb durch lokale lastbedingte Verformungen der gewünschte konstruierte großflächige Kontakt nicht erreicht wird. Vielmehr neigen solche Ketten zu einem Kantentragen an den Rändern der Druckabschnitte, die einen übermäßigen Verschleiß des Kettengliedes sowie der Kettentasche nach sich ziehen, üblicherweise folgend in einen Entenbürzel.

Eine andere Art der Kettenform ist in DE 10 2010 061 264 A1 und US 2012/0065012 A1 offenbart. Hier werden ebenfalls Druckflächen an den Bogen der Kettenglieder bereitgestellt. Weniger ausgeprägt ist jedoch die Pfeilform. Die Druckflächen sind gerade ausgestaltet.

Aufgabe der Erfindung ist es vor diesem Hintergrund eine entsprechende Kette mit einem beschriebenen Kettenglied dahingehend weiterzubilden, damit diese auch unter Belastung in der Praxis einen sicheren und dauerhaften Betrieb ermöglicht. Weitere Aufgabe der Erfindung ist es, eine Anordnung einer solchen Kette und einem Kettenrad anzugeben.

Gelöst wird diese Aufgabe durch eine eingangs genannte, gattungsgemäße Kette mit den Merkmalen des Anspruchs 1. Die anordnungsbezogene Aufgabe wird gelöst durch eine Anordnung gemäß Anspruch 11. Vorteilhafte Ausgestaltungen ergeben sich aus den abhängigen Ansprüchen und der Beschreibung.

Kern der Erfindung ist es, die Stirnfläche zumindest eines Buges, typischerweise beider Buge in den Druckabschnitten in Richtung der Bugerstreckung konvex gekrümmt auszugestalten. Hierdurch wird die Kontaktfläche als Punktbelastung konstruktiv ausgelegt. Durch die abplattende Verformung des Druckabschnittes in der Kettentasche aufgrund der punktuellen Belastung im Betrieb ist die tatsächliche Kontaktfläche jedoch gegenüber dem unbelasteten Zustand vergrößert; durch die Verformung wird der Krümmungsradius der Krümmung der Druckabschnitte vergrößert. Umso höher die Belastung auf die Kette ist, desto stärker verformt sich der Druckabschnitt und bietet auf diese Weise eine umso größere Kontaktfläche, was wiederum die Flächenpressung herabsetzt. Der Druckabschnitt stellt somit in Abhängigkeit der Belastung eine adaptive Kontaktfläche bereit und ist nicht mehr aus konstruktiver Sicht vollständig Kontaktfläche. Vielmehr ist in der Regel nur ein Teil des Druckabschnittes Kontaktfläche.

Um eine optimale lastabhängige Kontaktflächengröße bereitzustellen und gleichzeitig die lokale Flächenpressung auf einem akzeptablen Niveau zu halten, ist vorgesehen, den Krümmungsradius der Druckabschnitte in Richtung der Bugerstreckung besonders groß auszugestalten. In die Berechnung einer optimalen Krümmung fließen die anzunehmende Lastamplitude, die Größe des Kettengliedes bzw. der Kettentasche insbesondere in Bugerstreckungsrichtung und das Verformungsverhalten des Kettengliedes und der Kettentasche, welches insbesondere vom verwendeten Material, welches üblicherweise Stahl ist, abhängt, ein. So kann die Krümmung im Druckabschnitt etwa einem Radius der 1,5-fachen bis 10-fachen, bevorzugt der 1,6-fachen bis 8-fachen äußeren Breite des Kettengliedes im Wesentlichen entsprechen.

Die dazugehörige, korrespondierende Kettentasche verfügt in dem Bereich, in dem ein Formschluss zwischen Druckabschnitt und Kettentasche erfolgt, ebenfalls über einen Druckabschnitt (nachfolgend Antriebsabschnitt genannt), der mit einer komplementären, üblicherweise konkaven Krümmung ausgestattet ist, die kleiner ist als die Krümmung des Druckabschnittes. Der Krümmungsradius ist somit größer; der kettentaschenseitige Antriebsabschnitt, der mit dem Druckabschnitt des Kettengliedes interagiert, kann auch als Gerade in Bugerstreckungsrichtung ausgeführt sein. Hierdurch wird ein Einführen des Kettengliedes in die Kettentasche ermöglicht.

Durch das Vorsehen einer Krümmung in den Druckabschnitten wird ein Kantentragen unterbunden, da selbst bei einer nicht optimalen Ausrichtung des Kettengliedes in der Kettentasche um die Hochachse des Kettengliedes gesichert immer eine großflächige Kontaktfläche bereitgestellt wird, die sich bezüglich ihrer Position entlang des Druckabschnittes variabel anpasst. Da der jeweilige Druckabschnitt eine größere Erstreckung in Bugerstreckung aufweist als die während der Auslegung vorgesehene jeweilige Kontaktfläche, ist durch den Druckabschnitt um die vorgesehene Kontaktfläche eine Art Pufferbereich zu etwaigen Kanten bereitgestellt, in dem in der Praxis die Kontaktfläche tatsächlich sein kann, ohne dass ein Kantentragen zu befürchten wäre. Die ideale, theoretische Kontaktfläche ist somit nicht durch Kanten begrenzt. Die Kontaktfläche auf dem Druckabschnitt ist somit bereits konstruktiv adaptiv an verschiedene Stellungen des Kettengliedes und Belastungsstärken angepasst.

Vor diesem Hintergrund ist auch bevorzugt vorgesehen, den Krümmungsradius im Druckabschnitt konstant auszugestalten; der Druckabschnitt ist dann in Bugerstreckungsrichtung mit einem einheitlichen Radius versehen. Hierdurch wird ein immer gleiches Verhalten bezüglich der sich einstellenden Größe der Kontaktfläche erzielt, gleich ob das Kettenglied in der Kettentasche ideal ausgerichtet ist oder um seine Hochachse leicht verstellt, was als tolerable Fehlstellung angesehen werden kann.

Um voneinander, etwa symmetrisch gegenüberliegende, separierte Druckabschnitte bereitzustellen, weist der Zwischenabschnitt zumindest abschnittsweise eine größere Krümmung, mithin einen kleineren Krümmungsradius, auf als die Druckabschnitte. Üblicherweise ist der Krümmungsradius der Druckabschnitte so groß, dass eine Fortführung der Stirnfläche mit ebenjener Krümmung der Druckabschnitte nicht sinnvoll möglich ist. Die entsprechende Krümmung des Zwischenabschnittes kann ebenfalls konvex, aber auch konkav sein. Dann ist der Zwischenabschnitt gegenüber den Kontaktflächen der Druckabschnitte zurückversetzt. So kann auch vorgesehen sein, Kettenglieder mit geraden Bugstirnflächen mit konvexen Druckabschnitten und einem dazwischenliegenden Zwischenabschnitt auszustatten, um die erfindungsgemäßen Vorteile zu erhalten. Die Ausgestaltung des Zwischenabschnittes einschließlich seiner Übergänge zu den Druckabschnitten (die dem Zwischenabschnitt zugerechnet werden) beeinflusst somit die Anstellung der Druckabschnitte gegenüber der Breitenrichtung des Kettengliedes. Der Zwischenabschnitt kann über einen konstanten Krümmungsradius verfügen; auch ist es möglich, dass er an seinen zu den beiden Druckabschnitten weisenden Seiten in die Druckabschnitte geknickt oder quasi geknickt übergeht. Dann weist er im Bereich des Knickes einen üblicherweise wesentlich kleineren Krümmungsradius auf als die Druckabschnitte. Auch ist möglich, dass der Zwischenabschnitt die genannte, etwa konstante Krümmung nur abschnittsweise aufweist, wobei sich beidseitig gerade Abschnitte, die sich bis zu den Druckabschnitten erstrecken, anschließen. Diese geraden Abschnitte sind bevorzugt Tangenten der beiden, durch die geraden Abschnitte verbundenen Krümmungsabschnitte.

Üblicherweise liegen die Druckabschnitte symmetrisch zueinander bezüglich der Teilungsachse des Kettengliedes.

Bevorzugt ist vorgesehen, dass die mittlere Tangente der Krümmung in Bugerstreckungsrichtung eines jeden Druckabschnittes mit der Kettengliedbreitenrichtung einen Winkel von 7° bis 20°, bevorzugt bis 15°, einschließt. Die mittlere Tangente ist der Mittelwert der Tangenten der Stirnfläche der möglichen Kontaktflächen im Druckabschnitt. Das Mindestmaß dieses Winkels wird bevorzugt durch den arctan (µ) bestimmt, wobei µ der Reibbeiwert des Kettengliedes und der korrespondierenden Kettentasche im Kontaktbereich ist. Auf diese Weise wird eine Selbstzentrierung des Kettengliedes in der Kettentasche vereinfacht, da die reibungsbedingte Selbsthemmung überwunden ist. Ein größerer Winkel verschlechtert jedoch die Richtung der Krafteinleitung in das Kettenglied, welche bevorzugt möglichst parallel zu den Schenkeln ausgerichtet ist. Vor diesem Hintergrund ist bevorzugt vorgesehen, den genannten Winkel auf 15°, bevorzugt auf 12° weiter zu begrenzen.

Weiter kann vorgesehen sein, dass der Druckabschnitt und ebenso üblicherweise auch der Zwischenabschnitt quer zur Bugerstreckung konvex gekrümmt ist. Die Stirnseite des Bugs ist somit in Höhenrichtung gekrümmt; insgesamt wird durch die Krümmungen in und quer zur Bugerstreckungsrichtung eine elliptisch-kalottenartige Ausgestaltung der Druckabschnitte angestrebt. Der Krümmungsradius quer zur Bugerstreckung kann bevorzugt für Druckabschnitt und Zwischenabschnitt gleich sein. Auch mit dieser konvexen Krümmung wird das Ziel verfolgt, eine theoretische Punktbelastung in der jeweiligen Kontaktfläche mit Blick auf die Kettentasche zu schaffen, die sich entsprechend der Belastung durch Verformung vergrößert und auch um gegenüber einer potentiellen Fehlstellung um die Querachse des Kettengliedes tolerant zu sein. Hierfür ist auch hier der Krümmungsradius der üblicherweise konvex ausgestalteten Kettentasche größer als derjenige des Kettengliedes und kann auch gerade ausgeführt sein.

Üblicherweise ist die Krümmung quer zur Bugerstreckung wesentlich größer als in Bugerstreckung und kann etwa die Hälfte der Höhe des Kettengliedes betragen. Der Ort der Kontaktfläche in Höhenrichtung ist in Bezug auf die Krümmung quer zur Bugerstreckung üblicherweise an einer Position, in der die Tangente der Krümmung quer zur Bugerstreckung mit der Höhenrichtung und damit im Wesentlichen senkrecht zur Zugrichtung der Kette einen Winkel von < arctan (µ) einschließt, wobei µ der Reibbeiwert des Kettengliedes und der Kettentasche im Bereich der Kontaktfläche ist. Dieser Winkel liegt etwa bei 7°. Vor diesem Hintergrund wird bevorzugt vorgeschlagen, die Kettentasche so auszugestalten, dass die Kontaktfläche sich zumindest bis in den Bereich der Äquatorlinie des Kettengliedes erstreckt.

Bevorzugt ist vorgesehen, dass der Bug insgesamt gerundet ausgestaltet ist. Einen solchen Bug kann man auch als kantenlos bezeichnen. Bevorzugt weist er in alle Richtungen konvexe Krümmungen auf und weist keine Ecken oder einschneidende bzw. hinterschneidende Taschen auf. Auf diese Weise wird ein Festsetzen von Material verhindert. Es versteht sich, dass bevorzugt das gesamte Kettenglied insgesamt gerundet ausgestaltet ist.

Bevorzugt ist vorgesehen, dass die Position der Kontaktflächen in Breitenrichtung des Kettengliedes im Normalbetrieb auf die Flucht der Schenkel begrenzt ist. Diese liegen somit in der Flucht der durch die Mantelfläche der sich jeweils anschließenden Schenkel Einhüllenden. Auf diese Weise wird eine besonders vorteilhafte Krafteinleitung in das Kettenglied ermöglicht. Ein Versatz quer zur Schenkellängserstreckung zwischen Kontaktfläche und Mittelfaser der Schenkel ist üblicherweise akzeptabel, wenngleich ein Einleiten in die Mittelfaser bevorzugt ist. Durch eine Materialanhäufung im Übergang vom Bug in den Schenkel, sodass der Querschnitt des Kettengliedes im Übergangsbereich größer ist als der Schenkeldurchmesser, wird eine Vergleichmäßigung der eingeleiteten Kraft in die Schenkel erzielt.

Üblicherweise ist vorgesehen, die Druckabschnitte des Buges bis zur äußeren Breite des Kettengliedes vorzusehen.

In diesem Zusammenhang kann auch vorgesehen sein, dass die Kette über einen Verklankungsschutz verfügt. Ein Verklanken liegt dann vor, wenn das in das erste Kettenglied eingreifende zweite Kettenglied einen Schenkel des ersten Kettengliedes umgreift und in die innere Breite des ersten Kettengliedes eintaucht. Dann kann es vorkommen, dass sich das zweite Kettenglied in einer Fehlposition gegenüber dem ersten Kettenglied festsetzt.

Um dies zu verhindern sind viele verschiedene Ausführungen bekannt.

So kann etwa vorgesehen sein, dass die Schenkel des ersten Kettengliedes im Querschnitt D-förmig ausgebildet sind, sodass ein Anschlag an den Kanten des D's bereitgestellt ist. Durch die Kanten des D's wird verhindert, dass das zweite Kettenglied in das erste Kettenglied eintauchen kann. Dies wird üblicherweise dadurch erreicht, dass durch die D-Form der Durchmesser quer zur Eintauchrichtung des zweiten Kettengliedes lokal so groß ist, dass das zweite Kettenglied nicht entsprechend der Eintauchrichtung gegenüber dem ersten Kettenglied ausgerichtet werden kann. Auf diese Weise wird eine Verklankungssituation verhindert.

In einer anderen Ausgestaltung kann als Verklankungsschutz auch eine Selbstentklankung vorgesehen sein. Eine solche ist in der Anmeldung, die den gleichen Zeitrang wie die vorliegende Anmeldung aufweist und vom gleichen Anmelder stammt, beschrieben. Beschrieben ist dort insbesondere ein Funktionsabschnitt, der im Bugbereich angeordnet ist. Der Funktionsabschnitt stellt eine Erstreckung in Bugerstreckung bereit, über die eine Kraft in die Stirnseite des Kettengliedes eingeleitet werden kann, wie in dieser Anmeldung vorgeschlagen. Auf die entsprechenden Ausführungen und Ausgestaltungen wird an dieser Stelle vollumfänglich Bezug genommen. Das erste Kettenglied ist in der Nomenklatur der anderen Anmeldung das Horizontalkettenglied.

Die Erfindung wird anhand der beiliegenden Figuren näher erläutert. Es zeigen:
- **Fig. 1:**: Eine dreidimensionale Ansicht eines ersten Kettengliedes,
- **Fig. 2:**: eine Draufsicht auf ein erstes Kettenglied in einer schematisch angedeuteten Kettentasche sowie darstellerisch ergänzt um einige Schnitte und
- **Fig. 3:**: eine Frontansicht der Bugstirnfläche mit eingezeichneten Kontaktflächen bei unterschiedlichen Belastungsstärken.

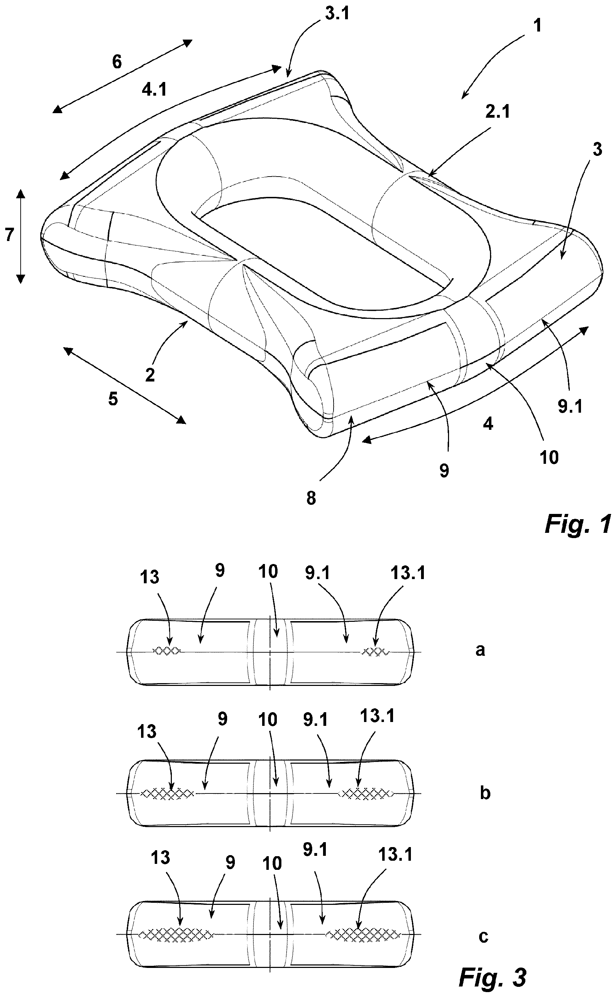

Figur 1 zeigt ein Kettenglied 1 einer nicht näher dargestellten Kette. In das Kettenglied 1 greift zum Ausbilden einer Kette ein nicht dargestelltes zweites Kettenglied ein. Das in den Figuren gezeigte Kettenglied 1 ist hier ein Horizontalkettenglied; das in das Kettenglied 1 eingreifende Kettenglied wird üblicherweise als Vertikalkettenglied bezeichnet.

Das Kettenglied 1 umfasst zwei Schenkel 2, 2.1, die voneinander beabstandet und parallel zueinander ausgerichtet sind. Die beiden Schenkel 2, 2.1 sind bezüglich der Längsachse des Kettengliedes 1 symmetrisch ausgebildet.

Die beiden Schenkel 2, 2.1 werden durch Buge 3, 3.1 in Bugerstreckungsrichtung 4, 4.1 miteinander verbunden. Auch die Buge 3, 3.1 sind bezüglich der Längsachse des Kettengliedes 1 jeweils symmetrisch ausgebildet und auch untereinander bezüglich der Querachse des Kettengliedes 1 symmetrisch.

In Figur 1 ist ebenfalls die Teilungsrichtung 5 des Kettengliedes 1 sowie dessen Breitenrichtung 6 und Höhenrichtung 7 eingezeichnet.

Die nach außen in Teilungsrichtung 5 weisende Stirnfläche 8 des Buges 3 (gleiches gilt für den gegenüberliegenden Bug 3.1, wird aufgrund der Symmetrie jedoch nicht weiter durch Bezugszeichen in Bezug genommen, wenngleich sämtliche Ausführungen auch für diesen Bug 3.1 gelten) weist zwei voneinander in Bugerstreckungsrichtung 4 beabstandete Druckabschnitte 9, 9.1 auf und einen dazwischenliegenden, die Druckabschnitte 9, 9.1 verbindenden Zwischenabschnitt 10. Der Zwischenabschnitt 10 schließt sich unmittelbar an die Druckabschnitte 9, 9.1 an.

Die Druckabschnitte 9, 9.1 sind in Bugerstreckungsrichtung 4 gekrümmt ausgestaltet, und zwar mit einem sehr großen Radius, der in diesem Ausführungsbeispiel etwa 1.500mm beträgt. Dies entspricht etwa dem 9-fachen der äußeren Breite des Kettengliedes 1.

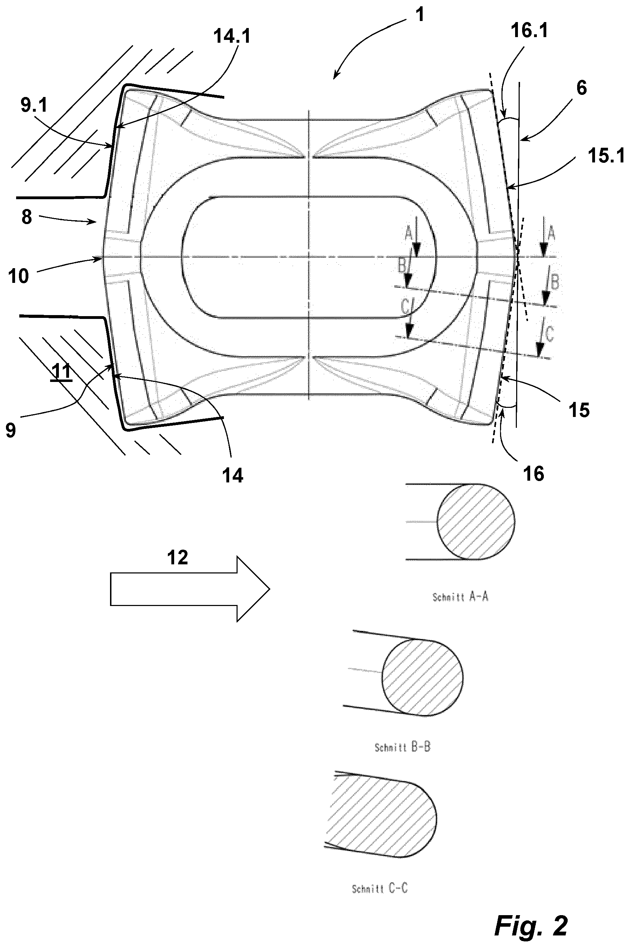

Auch der Zwischenabschnitt 10 ist in Bugerstreckungsrichtung 4 konstant mit einem Radius gekrümmt, weist jedoch einen kleineren Krümmungsradius auf als die Druckabschnitte 9, 9.1 und ist somit stärker gekrümmt. Dies ist auch in Figur 2 zu erkennen, welche eine Draufsicht auf das Kettenglied 1 darstellt.

Die nach außen in Teilungsrichtung 5 weisende Stirnfläche 8 des Bugs 3 ist ferner quer zur Bugerstreckungsrichtung 4, und somit in Höhenrichtung 7 gekrümmt. Die Krümmung hier ist jedoch größer als in Bugerstreckungsrichtung 4 in den Druckabschnitten 9, 9.1, mithin ist der Krümmungsradius kleiner. Auch dies ist gut in Figur 2 in den Schnitten A-A, B-B und C-C zu erkennen, die Querschnitte des Buges 3 entlang der eingezeichneten Schnittflächen darstellend. Der Krümmungsradius in Höhenrichtung 7 ist konstant, und zwar mit einem Radius der Hälfte der Höhe des Kettengliedes 1.

Durch die so ausgestaltete Stirnfläche 8 des Kettengliedes 1 werden in den Druckabschnitten 9, 9.1 Kontaktflächen 13 13.1 bereitgestellt, über die ausgehend von einer korrespondierenden, in Figur 2 schematisch dargestellten Kettentasche 11 eine Druckkraft in den Bug 3 des Kettengliedes 1 eingebracht wird, sodass in die nicht näher dargestellte Kette eine Zugkraft eingeleitet wird. Hierfür schiebt die Kettentasche 11 das Kettenglied 1 in eine Förderrichtung 12.

Je nach Größe der Belastung zwischen Kettentasche 11 und Kettenglied 1 wird durch die gekrümmten Druckabschnitte 9, 9.1 eine kleinere oder grö-ßere Kontaktfläche 13, 13.1 bereitgestellt. Für verschiedene Belastungsstärken sind die Kontaktflächen 13, 13.1 in einer Kreuzschraffur in Figur 3 dargestellt, wobei die Teilfigur a die kleinste Belastungsstufe, Teilfigur b eine mittlere Belastungsstufe und Teilfigur c eine starke Belastungsstufe repräsentiert. Umso größer die Belastung ist, desto größer ist die jeweilige Kontaktfläche 13, 13.1. Begründet wird dies mit der durch die Belastung in die Stirnfläche 8, respektive in die Druckabschnitte 9, 9.1 eingebrachte Verformung. Die elliptisch-kalottenartige Ausgestaltung der Druckabschnitte 9, 9.1 wird durch die Kettentasche 11, respektive den kettentaschenseitigen Antriebsabschnitt 14, 14.1 zumindest abschnittsweise so verformt, dass eine flächige Anlage der Druckabschnitte 9, 9.1 an den Antriebsabschnitten 14, 14.1 gegeben ist. Es versteht sich, dass üblicherweise der kettentaschenseitige Antriebsabschnitt 14, 14.1 ebenfalls entsprechend verformt wird, üblicherweise jedoch weniger als der kettengliedseitige Druckabschnitt 9, 9.1. Die Krümmung der Druckabschnitte 9, 9.1 insbesondere in Bugerstreckungsrichtung 4 ist dabei so klein bzw. der Krümmungsradius so groß, dass bereits eine kleine belastungsbedingte Verformung des Druckabschnittes 9, 9.1 in eine relativ große sich einstellende Kontaktfläche 13, 13.1 mündet, sodass die Flächenpressung herabgesetzt wird. Durch die konvexe Krümmung in Bugerstreckungsrichtung 4 der Druckabschnitte 9, 9.1 ist zudem sichergestellt, dass eine Fehlausrichtung des Kettengliedes 1 in der Kettentasche 11 um die Hochachse unproblematisch ist; zwar wandern die Kontaktflächen 13, 13.1 ggf. auf den jeweiligen Druckabschnitten 9, 9.1 in Bugerstreckungsrichtung 4, jedoch bleibt der Effekt der verformungsbegründeten Abplattung gleich, sodass die Kontaktflächen 13, 13.1 in ihrer Größe sich bei gleicher Belastung nicht bzw. nicht wesentlich ändern, insbesondere nicht, wenn der Krümmungsradius der Druckabschnitte 9, 9.1 - wie hier - konstant ausgestaltet ist.

Die Kontaktflächen 13, 13.1 liegen in der Flucht mit den Schenkeln 2, 2.1. Hierfür sind der Bug 3, respektive die Druckabschnitte 9, 9.1 entsprechend weit ausgestaltet, nämlich in diesem Ausführungsbeispiel über die äußere Breite der Schenkel 2, 2.1 hinausgehend. Entsprechend ist auch die Kettentasche 11 ausgestaltet. Hierdurch wird eine großflächige Krafteinleitung in die Stirnfläche 8 des Buges 3 erzielt. Gleichzeitig sind die Druckabschnitte 9, 9.1 in diesem Bereich relativ flach gegenüber der Breitenrichtung 6 des Kettengliedes 1 bis über die Breite der Schenkel 2, 2.1 hinaus angestellt.

Für eine Selbstzentrierung des Kettengliedes 1 in der Kettentasche 11 ist vorgesehen, die Druckabschnitte 9, 9.1 gegenüber der Breitenrichtung 6 des Kettengliedes 1 anzustellen. Die mittlere Tangente 15, 15.1 der Druckabschnitte 9, 9.1 und die Breitenrichtung 6 schließen in diesem Ausführungsbeispiel einen Winkel 16, 16.1 von etwa 8° ein. Dieser Winkel 16, 16.1 ist größer als der arctan (µ), wobei µ der Reibbeiwert im Bereich der Druckabschnitte 9, 9.1 des Kettengliedes 1 sowie der Antriebsabschnitte 14, 14.1 der Kettentasche 11 ist. Durch das Anstellen der Druckabschnitte 9, 9.1 mit einem größeren Winkel 16, 16.1 gegenüber der Breitenrichtung 6 als den eben genannten wird die reibungsbedingte Selbsthemmung überwunden.

Gleichzeitig ist der Anstellwinkel 16, 16.1 so flach wie möglich gehalten, um eine möglichst gerade Krafteinleitung ausgehend von der Kettentasche 11 in die Schenkel 2, 2.1, mithin in die Zugrichtung der Kette zu ermöglichen.

Um die beiden Druckabschnitte 9, 9.1 entsprechend anzustellen und trotzdem einen großen Krümmungsradius in den Druckabschnitten 9, 9.1 bereitzustellen, weist der Zwischenabschnitt 10 einen kleineren Krümmungsradius als derjenige in den Druckabschnitten 9, 9.1 auf. Der Zwischenabschnitt 10 erstreckt sich hier als Segment über den Winkelabschnitt, um den die Druckabschnitte 9, 9.1 im Wesentlichen angestellt sind (aufgrund der Krümmung in den Druckabschnitten 9, 9.1 etwas weniger als der in Teilungsrichtung 5 weisende Winkel zwischen den mittleren Tangenten 15, 15.1 der Druckabschnitte 9, 9.1).

Die Erfindung ist anhand eines Ausführungsbeispiels beschrieben worden. Ohne den Schutzbereich, beschrieben durch die Ansprüche, zu verlassen, ergeben sich für den Fachmann zahlreiche weitere Ausgestaltungen den Erfindungsgedanken zu verwirklichen, ohne dass diese im Rahmen dieser Ausführungen näher erläutert werden müssten.

### Bezugszeichenliste

- 1: Kettenglied
- 2, 2.1: Schenkel
- 3, 3.1: Bug
- 4, 4.1: Bugerstreckungsrichtung
- 5: Teilungsrichtung des Kettengliedes
- 6: Breitenrichtung des Kettengliedes
- 7: Höhenrichtung des Kettengliedes
- 8: Stirnfläche
- 9, 9.1: Druckabschnitt
- 10: Zwischenabschnitt
- 11: Kettentasche
- 12: Förderrichtung
- 13, 13.1: Kontaktfläche
- 14, 14.1: Antriebsabschnitt
- 15, 15.1: mittlere Tangente
- 16, 16.1: Winkel zwischen Breitenrichtung und mittlerer Tangente

## Patentansprüche

1. Kette, insbesondere für einen Förderer mit einem insbesondere als Horizontalkettenglied ausgelegten ersten Kettenglied (1), das Kettenglied (1) aufweisend zwei Schenkel (2, 2.1) und zwei durch ihre jeweilige Erstreckung (4) die Schenkel (2, 2.1) verbindende Buge (3, 3.1), wobei die nach außen in Teilungsrichtung (5) weisende Stirnfläche (8) zumindest eines Buges (3, 3.1) zwei voneinander in Bugerstreckung (4, 4.1) beabstandete Druckabschnitte (9, 9.1) und einen dazwischenliegenden, die Druckabschnitte (9, 9.1) verbindenden Zwischenabschnitt (10) umfasst wobei die Druckabschnitte (9, 9.1) jeweils eine Kontaktfläche (13, 13.1) zwischen dem Kettenglied (1) und einer korrespondierenden Kettentasche (11) eines Kettenrades zum Einleiten einer Zugkraft in die Kette bereitstellen, **dadurch gekennzeichnet, dass** die Stirnfläche (8) des Buges (3, 3.1) in Richtung der Bugerstreckung (4, 4.1) in ihren Druckabschnitten (9, 9.1) konvex gekrümmt ist und in ihrem Zwischenabschnitt (10) zumindest abschnittsweise einen kleineren Krümmungsradius aufweist als in den Druckabschnitten (9, 9.1).

2. Kette nach Anspruch 1, **dadurch gekennzeichnet, dass** die mittlere Tangente (15, 15.1) der Krümmung in Bugerstreckung (4, 4.1) eines jeden Druckabschnittes (9, 9.1) mit der Kettengliedbreitenrichtung (6) einen Winkel (16, 16.1) von 7° bis 20° einschließt.

3. Kette nach einem der Ansprüche 1 oder 2, **dadurch gekennzeichnet, dass** der Krümmungsradius in Bugerstreckung (4, 4.1) in den Druckabschnitten (9, 9.1) konstant ist.

4. Kette nach einem der Ansprüche 1 bis 3, **dadurch gekennzeichnet, dass** der Krümmungsradius in Bugerstreckung (4, 4.1) in dem Zwischenabschnitt (10) konstant ist.

5. Kette nach einem der Ansprüche 1 bis 4, **dadurch gekennzeichnet, dass** der Druckabschnitt (9, 9.1) auch quer zur Bugerstreckung (4, 4.1) konvex gekrümmt ist.

6. Kette nach Anspruch 5, **dadurch gekennzeichnet, dass** die Krümmung des Druckabschnittes (9, 9.1) quer zur Bugerstreckung (4, 4.1) konstant ist.

7. Kette nach einem der Ansprüche 1 bis 6, **dadurch gekennzeichnet, dass** der Bug (3, 3.1) insgesamt gerundet ausgestaltet ist.

8. Kette nach einem der Ansprüche 1 bis 7, **dadurch gekennzeichnet, dass** die Druckabschnitte (9, 9.1) zumindest bis zur äußeren Breite der Schenkel (2, 2.1) vorgesehen sind.

9. Kette nach einem der Ansprüche 1 bis 8, **dadurch gekennzeichnet, dass** das Kettenglied und/oder das eingreifende Kettenglied so ausgebildet sind, dass ein Verklanken der beiden Kettenglieder verhindert ist.

10. Kette nach Anspruch 9, **dadurch gekennzeichnet, dass** die Schenkel des ersten Kettengliedes im Querschnitt D-förmig ausgebildet sind, sodass ein Anschlag an den Kanten des D's bereitgestellt ist, verhindernd, dass ein in das erste Kettenglied eingreifendes zweites Kettenglied in das erste Kettenglied eintauchen kann, wenn es einen Schenkel des Kettengliedes umgreift.

11. Anordnung einer Kette nach einem der Ansprüche 1 bis 10 mit einem Kettenrad, das Kettenrad aufweisend zumindest eine zu dem ersten Kettenglied (1) der Kette korrespondierenden Kettentasche (11).

12. Anordnung nach Anspruch 11, **dadurch gekennzeichnet, dass** die Kettentasche (11) im Bereich der Druckabschnitte (9, 9.1) des Kettengliedes (1) einen größeren Krümmungsradius in Kettengliedbreitenrichtung (6) aufweist als die Druckabschnitte (9, 9.1) des Kettengliedes (1).

13. Anordnung nach einem der Ansprüche 11 oder 12, **dadurch gekennzeichnet, dass** die Kontaktflächen (13, 13.1) des Kettengliedes (1) im Normalbetrieb auf die Flucht des jeweiligen sich anschließenden Schenkels (2, 2.1) begrenzt ist.

## Claims

1. A chain, in particular for a conveyor with a first chain link (1) designed in particular as a horizontal chain link, the chain link (1) having two legs (2, 2.1) and two ends (3, 3.1) connecting the legs (2, 2.1) by their respective extension (4), wherein the end face (8) of at least one end (3, 3.1) facing outwards in the direction of pitch (5) comprises two pressure sections (9, 9.1) spaced apart from one another in the end extension (4, 4.1) and an intermediate section (10) lying there between connecting the pressure sections (9, 9.1), wherein the pressure sections (9, 9.1) each provide a contact surface (13, 13.1) between the chain link (1) and a corresponding chain pocket (11) of a chain wheel for introducing a tensile force into the chain, **characterized in that** the end face (8) of the end (3, 3.1) is convexly curved in the direction of the end extension (4, 4.1) in its pressure sections (9, 9.1) and in its intermediate section (10) has at least in sections a smaller radius of curvature than in the pressure sections (9, 9.1).

2. The chain according to claim 1, **characterized in that** the mean tangent (15, 15.1) of the curvature in the end extension (4, 4.1) of each pressure section (9, 9.1) encloses an angle (16, 16.1) of 7° to 20° with the chain link width direction (6).

3. The chain according to any one of claims 1 or 2, **characterized in that** the radius of curvature in the end extension (4, 4.1) in the pressure sections (9, 9.1) is constant.

4. The chain according to any one of claims 1 to 3, **characterized in that** the radius of curvature in the end extension (4, 4.1) is constant in the intermediate section (10).

5. The chain according to any one of claims 1 to 4, **characterized in that** the pressure section (9, 9.1) is also convexly curved transversely to the end extension (4, 4.1).

6. The chain according to claim 5, **characterized in that** the curvature of the pressure section (9, 9.1) transversely to the end extension (4, 4.1) is constant.

7. The chain according to any one of claims 1 to 6, **characterized in that** the end (3, 3.1) is designed to be rounded overall.

8. The chain according to any one of claims 1 to 7, **characterized in that** the pressure sections (9, 9.1) are provided at least up to the outer width of the legs (2, 2.1).

9. The chain according to any one of claims 1 to 8, **characterized in that** the chain link and/or the engaging chain link are designed in such a way that interlocking of the two chain links is prevented.

10. The chain according to claim 9, **characterized in that** the legs of the first chain link are D-shaped in cross section, so that a stop is provided at the edges of the D, preventing a second chain link engaging in the first chain link from being able to dip into the first chain link when it engages around a leg of the chain link.

11. An assembly of a chain according to any one of claims 1 to 10 with a chain wheel, the chain wheel having at least one chain pocket (11) corresponding to the first chain link (1) of the chain.

12. The assembly according to claim 11, **characterized in that** the chain pocket (11) in the region of the pressure sections (9, 9.1) of the chain link (1) has a larger radius of curvature in the chain link width direction (6) than the pressure sections (9, 9.1) of the chain link (1).

13. The assembly according to any one of claims 11 or 12, **characterized in that** the contact surfaces (13, 13.1) of the chain link (1) are limited in normal operation to the alignment of the respective adjoining leg (2, 2.1).

## Revendications

1. Chaîne, en particulier pour convoyeur, comportant un premier maillon (1) conçu en particulier comme maillon horizontal, le maillon (1) présentant deux pattes (2, 2.1) et deux arceaux (3, 3.1) reliant les pattes (2, 2.1) par leur prolongement respectif (4), dans laquelle la face frontale (8) d'au moins un arceau (3, 3.1), tournée vers l'extérieur dans le sens de la division (5), comprend deux sections de pression (9, 9.1) espacées l'une de l'autre dans le prolongement (4, 4.1) de l'arceau et une section intermédiaire (10) située entre celles-ci reliant les sections de pression (9, 9.1), dans laquelle les sections de pression (9, 9.1) fournissent chacune une surface de contact (13, 13.1) entre le maillon (1) et une poche de chaîne correspondante (11) d'un pignon pour l'introduction d'une force de traction dans la chaîne, **caractérisée en ce que** la face frontale (8) de l'arceau (3, 3.1) est courbée de manière convexe dans le sens du prolongement d'arceau (4, 4.1) dans ses sections de pression (9, 9.1) et présente, dans sa section intermédiaire (10), au moins dans certaines sections un rayon de courbure plus petit que dans les sections de pression (9, 9.1).

2. Chaîne selon la revendication 1, **caractérisée en ce que** la tangente moyenne (15, 15.1) de la courbure dans le prolongement d'arceau (4, 4.1) de chaque section de pression (9, 9.1) forme un angle (16, 16.1) de 7° à 20° avec la direction de la largeur du maillon (6).

3. Chaîne selon l'une des revendications 1 ou 2, **caractérisée en ce que** le rayon de courbure dans le prolongement d'arceau (4, 4.1) dans les sections de pression (9, 9.1) est constant.

4. Chaîne selon l'une des revendications 1 à 3, **caractérisée en ce que** le rayon de courbure dans le prolongement d'arceau (4, 4.1) est constant dans la section intermédiaire (10).

5. Chaîne selon l'une des revendications 1 à 4, **caractérisée en ce que** la section de pression (9, 9.1) est également courbée de manière convexe transversalement au prolongement d'arceau (4, 4.1).

6. Chaîne selon la revendication 5, **caractérisée en ce que** la courbure de la section de pression (9, 9.1) transversalement au prolongement d'arceau (4, 4.1) est constante.

7. Chaîne selon l'une des revendications 1 à 6, **caractérisée en ce que** l'arceau (3, 3.1) est réalisé de manière globalement arrondie.

8. Chaîne selon l'une des revendications 1 à 7, **caractérisée en ce que** les sections de pression (9, 9.1) sont prévues au moins jusqu'à la largeur extérieure des pattes (2, 2.1).

9. Chaîne selon l'une des revendications 1 à 8, **caractérisée en ce que** le maillon de chaîne et/ou le maillon de chaîne de mise en prise sont conçus de sorte que l'interverrouillage des deux maillons de chaîne est empêché.

10. Chaîne selon la revendication 9, **caractérisée en ce que** les pattes du premier maillon ont une section transversale en forme de D, de sorte qu'une butée est prévue aux bords du D, empêchant un second maillon venant en prise dans le premier maillon de pouvoir s'enfoncer dans le premier maillon lorsqu'il vient en prise autour d'une patte du maillon.

11. Agencement d'une chaîne selon l'une des revendications 1 à 10 avec un pignon, le pignon présentant au moins une poche de chaîne (11) correspondant au premier maillon (1) de la chaîne.

12. Agencement selon la revendication 11, **caractérisé en ce que** la poche de chaîne (11), dans la zone des sections de pression (9, 9.1) du maillon (1), présente un rayon de courbure plus grand dans le sens de la largeur du maillon (6) que les sections de pression (9, 9.1) du maillon (1).

13. Agencement selon l'une des revendications 11 ou 12, **caractérisé en ce que** les surfaces de contact (13, 13.1) du maillon (1) sont limitées en fonctionnement normal à l'alignement de la patte adjacente respective (2, 2.1).
